# EUROPÄISCHE PATENTSCHRIFT

(11) **EP 2 107 267 B1**
(45) Veröffentlichungstag und Bekanntmachung des Hinweises auf die Patenterteilung: **15.01.2014**
(21) Anmeldenummer: 09004972.7
(22) Anmeldetag: 03.04.2009
(51) Int. Cl.: F16F 1/02, A47C 27/06, A47C 23/00

(54) **Federelement**
Spring element
Elément de ressort

(30) Priorität: 03.04.2008 DE 202008004616 U
(43) Veröffentlichungstag der Anmeldung: 07.10.2009
(60) Teilanmeldung: 10014837.8
(73) Patentinhaber: Diemer & Dr. Jaspert GbR, 85630 Grasbrunn (DE)
(72) Erfinder: Jaspert, Bodo F., 85630 Grasbrunn (DE); Diemer, Gregor, 85456 Wartenberg (DE)
(74) Vertreter: Manitz, Finsterwald & Partner GbR

(56) Entgegenhaltungen:
- EP-A- 1 335 148
- WO-A-01/81785
- WO-A-2006/111685
- DE-U1-202007 000 158

## Beschreibung

Die vorliegende Erfindung betrifft ein Federelement als Kern einer Federkernmatratze oder als Stützelement einer Untermatratze zur Abstützung einer Obermatratze mit einer unteren Stützfläche, einer oberen Stützfläche und einem die untere Stützfläche mit der oberen Stützfläche verbindenden Federkörper, welcher mehrere Federarme aufweist, die von der unteren Stützfläche nach außen weg geführt sind, insbesondere ohne sich in Federrichtung betrachtet zu überlappen, wobei die Federarme in Federrichtung betrachtet außerhalb der unteren Stützfläche verlaufen.

Ein derartiges Federelement ist beispielsweise aus der EP 1 335 148 A2 bekannt. Weiterer Stand der Technik ist aus der WO 01/81785 A, der WO 2006/111685 A, der EP 1 335 148 A und der DE 20 2007 000 158 U1 bekannt.

Der Erfindung liegt die Aufgabe zugrunde, ein derartiges Federelement weiterzubilden.

Diese Aufgabe wird dadurch gelöst, dass jeweils zwei Federarme der mindestens zwei Federarme an ihrem radial außen liegenden Ende miteinander verbunden sind und von dort mit einem gemeinsamen Abschnitt verbunden zurück nach radial innen verlaufen.

Erfindungsgemäß sind die Federarme also jeweils in ihrem Umkehrpunkt miteinander verbunden und verlaufen einstückig oder verbunden miteinander zurück nach innen. Dadurch ergibt sich eine symmetrische Anordnung, bei der sich die nach außen laufenden Armabschnitte bei Kompression nicht auseinander bewegen. Bei Kompression wird vielmehr nur der gemeinsame nach innen gerichtete Arm verformt.

Nach einer Ausgestaltung der Erfindung sind die beiden Federarme jeweils an ihrem radial inneren Ende aneinander angeformt. Dadurch ergibt sich eine stabile Struktur.

Die Federarme können bis zu ihrer Verbindungsstelle gemeinsam einen Bogen bilden. Sie können insbesondere einen Kreisbogen, ein Oval aber auch ein Mehreck bilden. Dabei befindet sich der radial nach innen zurückgeführte gemeinsame Abschnitt in Federrichtung bevorzugt innerhalb des Bogens. Dadurch ergibt sich eine symmetrische Anordnung und zugleich eine gute Entformbarkeit des Federelementes.

Nach einer weiteren Ausgestaltung der Erfindung können die beiden Federarme mit ihren gemeinsamen, nach radial innen verlaufenden Abschnitt aneinander angeformt ausgebildet sein. Hierdurch ergibt sich wiederum ein stabiler Aufbau.

Nach einer anderen Ausgestaltung der Erfindung ist der gemeinsame rückgeführte Abschnitt ebenfalls bogenförmig ausgebildet. Dies bewirkt eine erhöhte seitliche Stabilität.

An das radial innere Ende des gemeinsamen rückgeführten Abschnittes kann sich mindestens ein weiterer, nach radial außen erstreckender Abschnitt anschließen. Dieser kann sich beidseits des nach radial innen rückgeführten Abschnitts oder innerhalb des Bogens erstrecken, falls auch der nach radial innen rückgeführte Abschnitt bogenförmig ausgebildet ist. Durch diesen weiteren nach radial außen geführten Abschnitt ergibt sich eine Verlängerung der Federarme, die zur Vergrößerung der Federhöhe verwendet werden kann. Außerdem kann dadurch der nach radial innen zurückgeführte Abschnitt weiter nach innen zurückgeführt werden.

Das radial innere Ende des gemeinsamen Abschnitts der beiden Federarme ist bevorzugt jeweils als Teil der oberen Stützfläche ausgebildet oder als Aufnahme für eine Deckplatte.

Bei allen Ausgestaltungen der Erfindung verlaufen die Federarme bevorzugt ausgehend von der unteren Stützfläche strahlenförmig nach radial außen. Auch hier ergibt sich eine stabile symmetrische Anordnung mit guten Federeigenschaften.

Das Federelement besteht bevorzugt aus Kunststoff und ist insbesondere einstückig gefertigt. Um eine einfache Entformung des Federelements zu ermöglichen, ist dieses so ausgebildet, dass sich die Teile des Federelements in Federrichtung betrachtet nicht gegenseitig überdecken.

Ausführungsbeispiele der Erfindung sind in der Zeichnung dargestellt und werden nachfolgend beschrieben. Es zeigen, jeweils in schematischer Darstellung,
- Fig. 1: eine perspektivische Ansicht eines erfindungsgemäßen Federelements,
- Fig. 2: eine Draufsicht auf die Oberseite des Federelements von Fig. 1,
- Fig. 3: eine Seitenansicht des Federelements von Fig. 1,
- Fig. 4: eine um 90° gedrehte Seitenansicht des Federelements von Fig. 1,
- Fig. 5: eine perspektivische Ansicht eines weiteren erfindungsgemäßen Federelements,
- Fig. 6: eine Draufsicht auf die Oberseite des Federelements von Fig. 5,
- Fig. 7: eine Seitenansicht des Federelements von Fig. 5, und
- Fig. 8: eine um 90° gedrehte Seitenansicht des Federelement von Fig. 5.

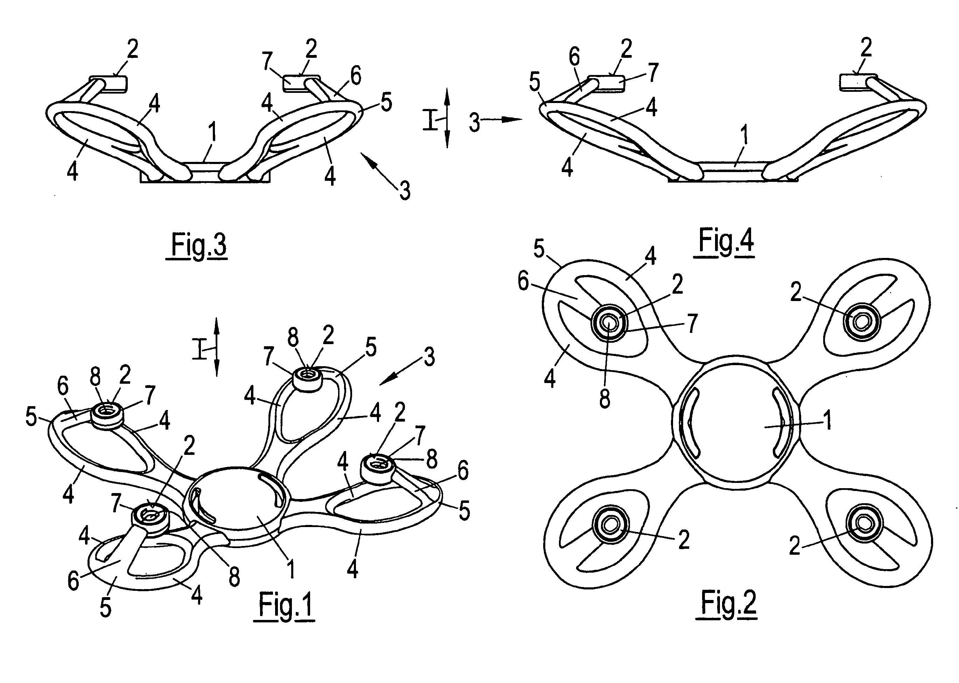

Das in den Fig. 1 bis 4 dargestellte Federelement umfasst eine untere Stützfläche 1, eine obere Stützfläche 2 und einen die untere Stützfläche 1 mit der oberen Stützfläche 2 verbindenden Federkörper 3. Der Federkörper 3 umfasst mehrere Federarme 4, die von der unteren Stützfläche 1 nach außen weg und anschließend wieder zurück nach innen geführt sind, ohne sich in Federrichtung I betrachtet zu überlappen, wobei jeweils zwei Federarme 4 an ihrem radial inneren Ende aneinander angeformt sind. An ihrem radial außen liegenden Ende 5 sind jeweils zwei Federarme 4 miteinander verbunden und von dort verbunden zurück nach radial innen geführt. Bis zu ihrer Verbindungsstelle 5 bilden die beiden verbundenen Federarme 4 zusammen einen Bogen. Neben der dargestellten ovalen Form kann auch eine Kreisform vorgesehen sein. Auch eine eckige oder jede andere Form ist grundsätzlich möglich.

Die beiden Federarme 4 sind an ihren gemeinsamen, nach radial innen zurückgeführten Abschnitten 6 aneinander angeformt bzw. einstückig miteinander ausgebildet. Das radial innere Ende der gemeinsamen Abschnitte 6 der jeweils paarweise verbundenen Federarme 4 geht im dargestellten Ausführungsbeispiel in ein ringförmiges Element 7 über. Die Öffnung 8 des Rings kann als Aufnahme für ein Verbindungselement einer hier nicht dargestellten Deckplatte dienen. Die Elemente 7 können aber auch selbst als Auflagefläche dienen. Gemeinsam bilden alle Elemente 7 jedenfalls die obere Stützfläche 2.

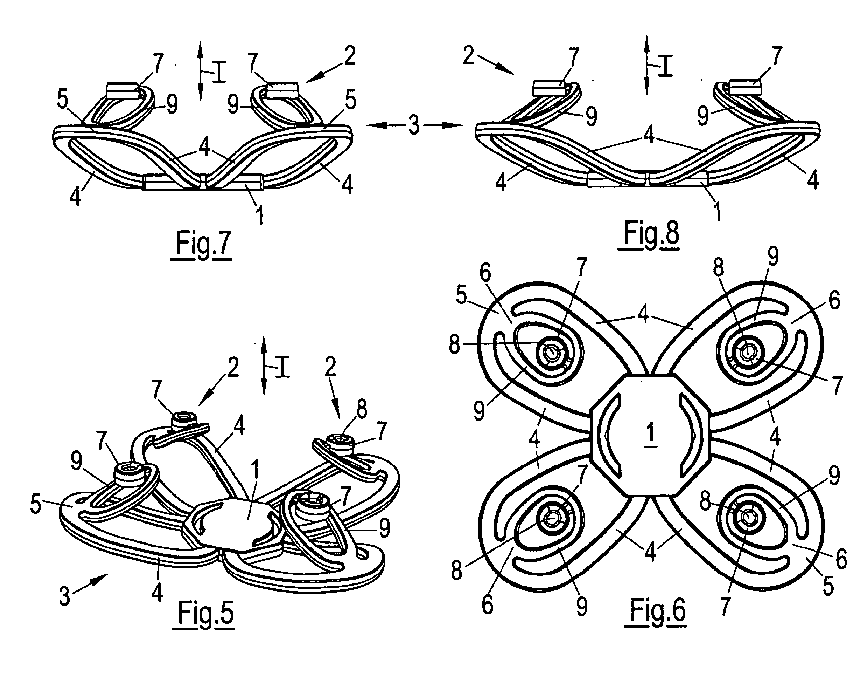

Das in den Fig. 5 bis 8 dargestellte Federelement umfasst ebenfalls eine untere Stützfläche 1, eine obere Stützfläche 2 und einen die untere Stützfläche 1 mit der oberen Stützfläche 2 verbindenden Federkörper 3. Der Federkörper 3 umfasst wiederum mehrere Federarme 4, die von der unteren Stützfläche 1 nach außen weg und dann anschließend wieder zurück nach innen geführt sind, ohne sich in Federrichtung I betrachtet zu überlappen. Außerdem sind auch hier jeweils zwei Federarme 4 an ihrem radial außen liegenden Ende 5 miteinander verbunden und von dort zurück nach radial innen geführt. Die zurückgeführten Abschnitte der Federarme 4 sind jedoch nicht miteinander verbunden sondern bilden ebenfalls einen Bogen 9. Der Bogen kann auch hier neben der dargestellten ovalen Form eine Kreisform, eine eckige oder jede andere Form aufweisen.

Auch bei dem in den Fig. 5 bis 8 dargestellten Federelement weisen die radial inneren Enden der rückgeführten Abschnitte 6, nämlich der Bögen 9, ein ringförmiges Element 7 auf, welches sich hier jedoch in Federrichtung I betrachtet innerhalb des Bogens 9 befindet und an dessen radial inneres Ende angeformt ist. Jedes ringförmige Element weist wiederum eine Öffnung 8 auf, die als Verbindungselement für eine Deckplatte dienen kann. Auch hier können die Elemente 7 selbst als Auflagefläche dienen oder als Teil einer Deckplatte ausgebildet sein.

### Bezugszeichenliste

- 1: untere Stützfläche
- 2: obere Stützfläche
- 3: Federkörper
- 4: Federarm
- 5: Umkehrpunkt
- 6: Abschnitt
- 7: Ringelement
- 8: Öffnung
- 9: Bogen
- 10: Abschnitt
- 11: Abschnitt
- 12: Deckplatte
- I: Federrichtung

## Patentansprüche

1. Federelement, insbesondere als Kern einer Federkernmatratze oder als Stützelement einer Untermatratze zur Abstützung einer Obermatratze, mit einer unteren Stützfläche (1), einer oberen Stützfläche (2) und einem die untere Stützfläche (1) mit der oberen Stützfläche (2) verbindenden Federkörper (3), welcher mindestens zwei Federarme (4) aufweist, die von der unteren Stützfläche (1) nach außen weg geführt sind, insbesondere ohne sich in Federrichtung (I) betrachtet zu überlappen, wobei die Federarme (4) in Federrichtung (I) betrachtet außerhalb der unteren Stützfläche (1) verlaufen,
**dadurch gekennzeichnet, dass**
jeweils zwei Federarme (4) der mindestens zwei Federarme (4) an ihrem radial außen liegenden Ende (5) miteinander verbunden sind und von dort mit einem gemeinsamen Abschnitt (6) verbunden zurück nach radial innen verlaufen.

2. Federelement nach Anspruch 1,
**dadurch gekennzeichnet, dass**
die beiden Federarme (4) jeweils an ihrem radial inneren Ende aneinander angeformt sind.

3. Federelement nach Anspruch 1 oder 2,
**dadurch gekennzeichnet, dass**
die beiden Federarme (4) zusammen bis zu ihrer Verbindungsstelle (5) einen Bogen bilden, wobei der Bogen insbesondere kreisförmig, oval oder eckig ausgebildet ist, wobei sich der radial nach innen zurückgeführte gemeinsame Abschnitt (6) in Federrichtung (I) gesehen bevorzugt innerhalb des Bogens befindet.

4. Federelement nach einem der vorhergehenden Ansprüche,
**dadurch gekennzeichnet, dass**
die beiden Federarme (4) mit ihrem gemeinsamen, nach radial innen verlaufenden Abschnitt (6) aneinander angeformt ausgebildet sind.

5. Federelement nach einem der Ansprüche 1 bis 3,
**dadurch gekennzeichnet, dass**
der gemeinsame Abschnitt (9) ebenfalls bogenförmig ausgebildet ist.

6. Federelement nach einem der vorhergehenden Ansprüche,
**dadurch gekennzeichnet, dass**
sich an das radial innere Ende des gemeinsamen Abschnitts (6) mindestens ein sich nach radial außen erstreckender Abschnitt (7), insbesondere innerhalb des vom gemeinsamen Abschnitt (6) gebildeten Bogens (9) oder beidseits des aneinander angeformten Abschnitts (6) anschließt.

7. Federelement nach einem der vorhergehenden Ansprüche,
**dadurch gekennzeichnet, dass**
das radial innere Ende (7) des gemeinsamen Abschnitts (6) der beiden Federarme (4) oder der sich daran anschließende, nach radial außen erstreckende Abschnitt (7) jeweils als Teil der oberen Stützfläche (2) oder als Aufnahme für eine Deckplatte ausgebildet ist, insbesondere eine zentrale Eingriffsöffnung (8) aufweist.

8. Federelement nach einem der vorhergehenden Ansprüche,
**dadurch gekennzeichnet, dass**
die Federarme (4) strahlenförmig nach radial außen verlaufen.

9. Federelement nach einem der vorhergehenden Ansprüche,
**dadurch gekennzeichnet, dass**
das Federelement aus Kunststoff besteht, wobei das Federelement bevorzugt einstückig ausgebildet ist, insbesondere ohne Abschnitte, die sich in Federrichtung (I) betrachtet gegenseitig überlappen.

## Claims

1. A spring element, in particular as a frame of an innerspring mattress or as a support element of an undermattress for supporting an overmattress, having a lower support surface (1), an upper support surface (2) and a spring body (3) which connects the lower support surface (1) to the upper support surface (2) and which has at least two spring arms (4) which are led away to the outside from the lower support surface (1), in particular without overlapping, viewed in the spring direction (I), wherein the spring arms (4) extend outside the lower support surface (1) viewed in the spring direction (I),
**characterised in that**
two respective spring arms (4) of the at least two spring arms (4) are connected to one another at their radially outwardly disposed ends (5) and the spring arms extend back from there radially inwardly in a connected manner via a common section (6).

2. A spring element in accordance with claim 1,
**characterised in that**
the two spring arms (4) are each moulded to one another at their radially inner ends.

3. A spring element in accordance with claim 1 or claim 2,
**characterised in that**
the two spring arms (4) together form an arc up to their connection point (5), with the arc in particular being circular, oval or rectangular, with the common section (6) led back radially inwardly preferably being located within the arc viewed in the spring direction (I).

4. A spring element in accordance with any one of the preceding claims,
**characterised in that**
the two spring arms (4) are moulded to one another at their common section (6) which extends radially inwardly.

5. A spring element in accordance with any one of the claims 1 to 3,
**characterised in that**
the common section (9) is likewise arcuate.

6. A spring element in accordance with any one of the preceding claims,
**characterised in that**
at least one radially outwardly extending section (7) adjoins the radially inner end of the common section (6), in particular within the arc (9) formed by the common section (9) or at both sides of the section (6) moulded to one another.

7. A spring element in accordance with any one of the preceding claims,
**characterised in that**
the radially inner end (7) of the common section (6) of the two spring arms (4) or the adjoining section (7) extending radially outwardly is respectively formed as a part of the upper support surface (2) or as a receiver for a cover plate, in particular has a central engagement opening (8).

8. A spring element in accordance with any one of the preceding claims,
**characterised in that**
the spring arms (4) extend radially outwardly in a ray-like manner.

9. A spring element in accordance with any one of the preceding claims,
**characterised in that**
the spring element is composed of plastic, with the spring element preferably being in one piece, in particular without sections which mutually overlap viewed in the spring direction (I).

## Revendications

1. Élément de ressort, en particulier à titre de noyau d'un matelas à ressort ou à titre d'élément de soutien d'un sommier pour soutenir un matelas, comprenant une surface de soutien inférieure (1), une surface de soutien supérieure (2) et un corps de ressort (3) qui relie la surface de soutien inférieure (1) à la surface de soutien supérieure (2) et qui comprend au moins deux bras de ressort (4) qui sont menés vers l'extérieur en éloignement de la surface de soutien inférieure (1), en particulier sans se chevaucher lorsqu'on les observe dans la direction (I) du ressort, et les bras de ressort (4) s'étendent à l'extérieur de la surface de soutien inférieure (1) lorsqu'on les observe dans la direction (I) du ressort,
**caractérisé en ce que**
deux bras de ressort respectifs (4) desdits au moins deux bras de ressort (4) sont reliés l'un à l'autre à leur extrémité (5) située radialement à l'extérieur, et s'étendent en retour radialement vers l'intérieur depuis cet endroit de façon réunie avec un tronçon commun (6).

2. Élément de ressort selon la revendication 1,
**caractérisé en ce que** les deux bras de ressort (4) sont conformés l'un contre l'autre à leur extrémité radialement intérieur respective.

3. Élément de ressort selon la revendication 1 ou 2,
**caractérisé en ce que** les deux bras de ressort (4) forment conjointement un arc jusqu'à leur emplacement de liaison (5), ledit arc étant réalisé en particulier en forme de cercle, en forme ovale, ou en forme polygonale, et le tronçon commun (6) ramené radialement vers l'intérieur se trouve de préférence à l'intérieur de l'arc, vu dans la direction (I) du ressort.

4. Élément de ressort selon l'une des revendications précédentes,
**caractérisé en ce que** les deux bras de ressort (4) sont réalisés de manière conformée l'un contre l'autre avec leur tronçon commun (6) s'étendant radialement vers l'intérieur.

5. Élément de ressort selon l'une des revendications 1 à 3,
**caractérisé en ce que** le tronçon commun (9) est également réalisé en forme d'arc.

6. Élément de ressort selon l'une des revendications précédentes,
**caractérisé en ce qu'**au moins un tronçon (7) s'étendant radialement vers l'extérieur, en particulier à l'intérieur de l'arc (9) formé par le tronçon commun (6) ou des deux côtés du tronçon (6) conformés l'un contre l'autre, se raccorde à l'extrémité radialement intérieure du tronçon commun (6).

7. Élément de ressort selon l'une des revendications précédentes,
**caractérisé en ce que** l'extrémité radialement intérieure du tronçon commun (6) des deux bras de ressort (4) ou bien le tronçon (7) se raccordant à celui-ci et s'étendant radialement vers l'extérieur, sont réalisés respectivement en tant que partie de la surface de soutien supérieure (2) ou en tant que récepteur pour une plaque de couverture, et comporte en particulier une ouverture d'engagement centrale (8).

8. Élément de ressort selon l'une des revendications précédentes,
**caractérisé en ce que** les bras de ressort (4) s'étendent radialement vers l'extérieur en formant des rayons.

9. Élément de ressort selon l'une des revendications précédentes,
**caractérisé en ce que** l'élément de ressort est en matière plastique, et l'élément de ressort est réalisé de préférence d'une seule pièce, en particulier sans tronçons qui se chevauchent réciproquement, lorsqu'on les considère dans la direction (I) du ressort.
